(19) Europäisches Patentamt / European Patent Office / Office européen des brevets

(11) **EP 1 868 340 B1**

(12) **EUROPEAN PATENT SPECIFICATION**

(45) Date of publication and mention
of the grant of the patent:
**17.10.2012 Bulletin 2012/42**

(51) Int Cl.:
*H04L 27/00* *(2006.01)*    *H04L 27/34* *(2006.01)*

(21) Application number: **06115306.0**

(22) Date of filing: **12.06.2006**

(54) **Order calculation method in a quadrature amplitude modulation receiver**

Ordnungsberechnungsverfahren in einem QAM-Empfänger für quadraturmodulierte Signale

Procédé de calcul d'ordre dans un récépteur-QAM pour signaux modulés en quadrature

(84) Designated Contracting States:
**DE NL**

(43) Date of publication of application:
**19.12.2007 Bulletin 2007/51**

(73) Proprietor: **Ali Corporation**
**114, Taipei (TW)**

(72) Inventor: **ZHAO, Dan**
**Hsuhuei District, Shanghai City, (CN)**

(74) Representative: **2K Patentanwälte Blasberg**
**Kewitz & Reichel**
**Partnerschaft**
**Corneliusstraße 18**
**60325 Frankfurt a. M. (DE)**

(56) References cited:
**US-A- 5 022 053**    **US-A- 5 185 763**
**US-A- 6 081 567**    **US-A1- 2004 049 725**
**US-B1- 6 452 964**

**Description**

**BACKGROUND OF THE INVENTION**

**Field of the Invention**

The present invention relates to an order calculation method, and more particularly relates to an order calculation method in a quadrature amplitude modulation receiver.

**Description of the Related Art**

In recent years, a need (e.g. carrier recovery) to calculate an order of quadrature amplitude modulation (QAM) in a receiver of a communication system was arisen. A demodulator in a receiver can calculate the QAM order by sweeping (trying) every possibility in a predetermined range. The sweeping method may, however, take a long time.

The demodulator can also obtain the QAM order by gathering statistics of different amplitudes in a constellation diagram. For example, if there are 4 different amplitudes in the constellation diagram, the QAM order can be determined to be 16. In other words, the QAM technology utilized in the communication system is 16-QAM. However, the statistical method needs a huge amount of memory space to temporarily save the statistical values and the accuracy, is low, particularly in high order. US 5 185 763 is directed toward a method and apparatus in a communications device for mapping a selected group of data bits into a predetermined number of two-dimensional symbols selected from a minimized alphabet of M two-dimensional symbols forming a symbol constellation, with one of the two-dimensional symbols being transmitter during each symbol (i.e., baud) interval. A plurality of symbol mappers in an adaptive communications device use a superframe of bits per baud. Each superframe includes at least two groups of frames, a low bit frame and a high bit frame. The superframe has A) one of these two types of frames uses whole bits per baud and the other uses fractional bits per baud or B) both of these two types of frames will use fractional bits per baud.

**BRIEF SUMMARY OF THE INVENTION**

A detailed description is given in the following embodiments with reference to the accompanying drawings.

An order calculation method in a quadrature amplitude modulation receiver comprises: calculating a maximum amplitude and a minimum amplitude value from a plurality of amplitudes in an input signal; calculating a ratio of the maximum amplitude to the minimum amplitude value; and determining a QAM order according to the ratio.

**BRIEF DESCRIPTION OF THE DRAWING**

The present invention can be more fully understood by reading the subsequent detailed description and examples with references made to the accompanying drawings, wherein:

Fig.1 shows a block diagram of a receiver according to an embodiment of the invention.

Fig.2 shows a decision table utilized in the QAM order calculator.

Fig.3A~3E show QAM constellation diagrams of different QAM orders in the decision table.

Fig.4 shows a block diagram of the QAM order calculator in Fig. 1.

Fig.5 shows another block diagram of the QAM order calculator in Fig. 1.

Fig.6 is a flowchart of the order calculation method in a QAM receiver according to an embodiment of the invention.

**DETAILED DESCRIPTION OF INVENTION**

The following description is of the best-contemplated mode of carrying out the invention. This description is made for the purpose of illustrating the general principles of the invention and should not be taken in a limiting sense. The scope of the invention is best determined by reference to the appended claims.

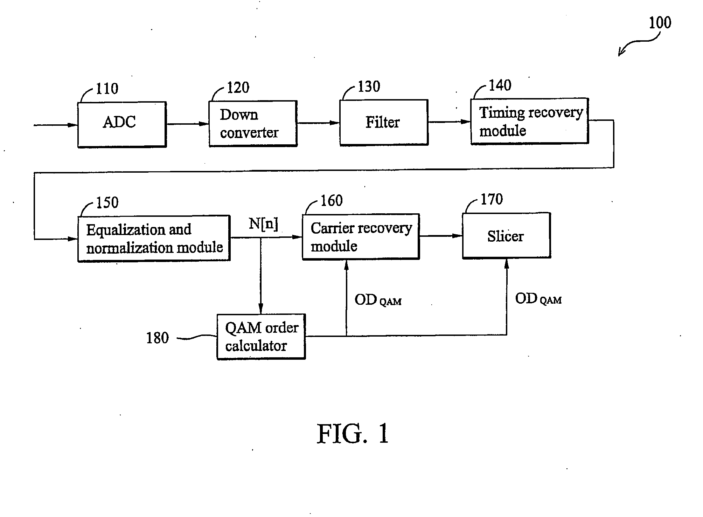

Please refer to Fig. 1. Fig.1 shows a block diagram of a receiver according to an embodiment of the invention. The receiver 100 comprises an analog-to-digital converter (ADC) 110, a down converter 120, a filter 130, a timing recovery module 140, an equalization and normalization module 150, a carrier recovery module 160, a slicer 170, and a QAM order calculator 180. The ADC 110 converts an analog input signal R(t) to a digital input signal R[n]. The digital input signal R[n] is then sequentially down converted, filtered, equalized, and normalized to generate a normalized input signal N[n]. The carrier recovery module 160 performs carrier recovery of the normalized input signal N[n] according to a QAM order $OD_{QAM}$ that is outputted from the QAM order calculator 180. The QAM order calculator 180 will be further described later. Finally, the slicer 170 performs decision according to a QAM constellation diagram to output a decided signal.

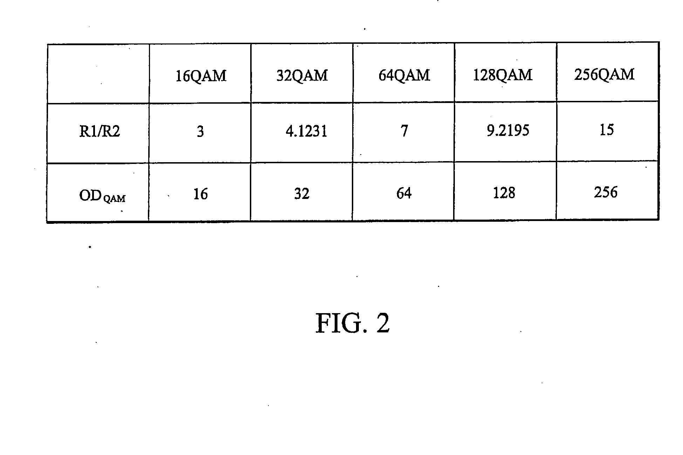

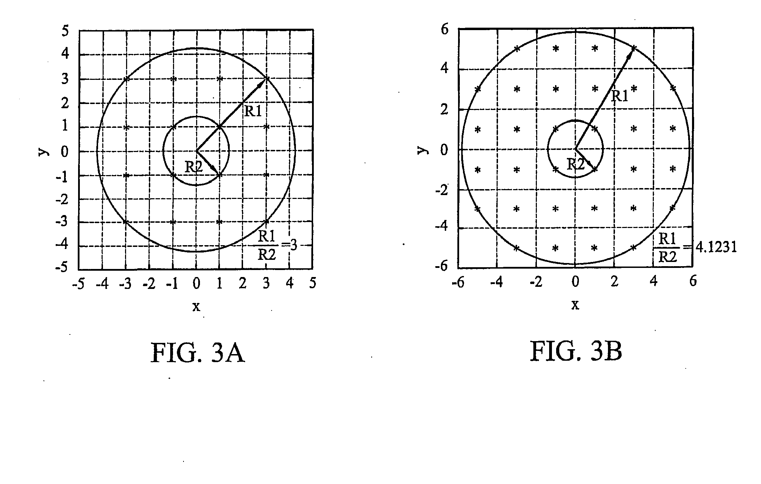

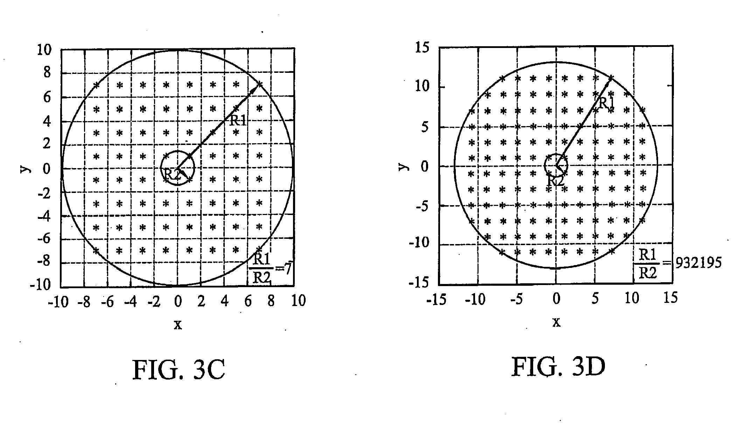

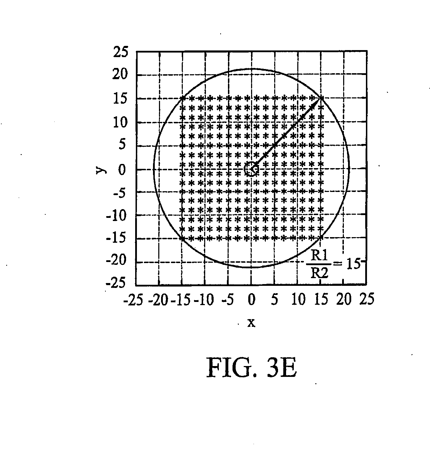

Please refer to Fig.2 and Fig.3 at the same time. Fig.2 shows a decision table utilized in the QAM order calculator 180. Figs.3A~3E show QAM constellation diagrams of different QAM orders in the decision table (Fig.2). For example, if the ratio of the outer meter (maximum amplitude) R1 to the inner meter (minimum amplitude) R2 in the QAM constellation diagram is 3, the QAM order calculator 180 looks up in the decision table to output the QAM order $OD_{QAM}$ equal to 16. Additionally, a window length W of the input signal varies with different QAM order. For example, if the window length W is equal to 1024 in 256QAM, the window length W of the 128QAM should be 512 (1024/2), the window length W of the 64QAM should be 256 (1024/4), etc... The window length W should be at least 4 times larger than the QAM order to maintain a higher accuracy. A detailed description of finding the outer and inner meters is provided in the following.

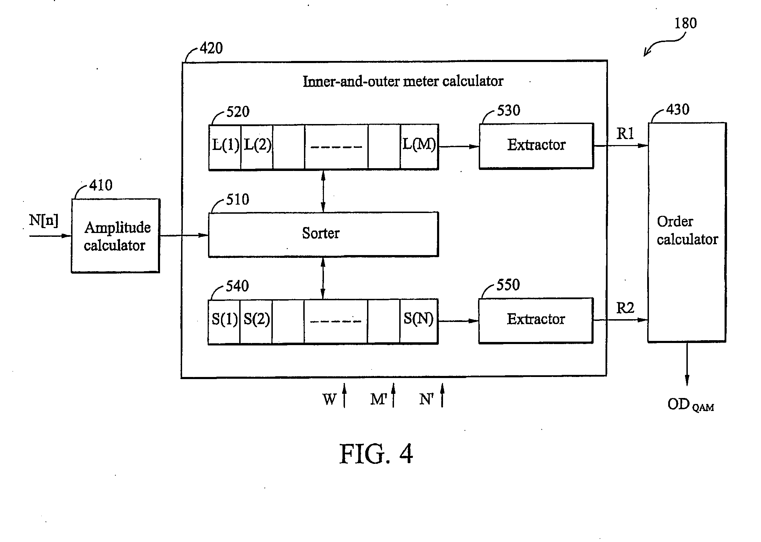

Please refer to Fig.4. Fig.4 shows a block diagram of the QAM order calculator 180 in Fig.1. The QAM order calculator 180 comprises an amplitude calculator 410, an inner-and-outer meter calculator 420, and an order calculator 430. The amplitude calculator 410 calculates and generates a plurality of amplitudes from each symbol in the normalized signal N[n]. The formula of calculating amplitude is shown in the following:

$$A = \sqrt{I^2 + Q^2}$$

wherein A is the amplitude and I and Q are values from I-Channel and Q-Channel. An approximate calculation is providing in the following to reduce cost:

$$A = \begin{cases} |I| + \dfrac{|Q|}{16} + \dfrac{|Q|}{64} & when & |Q| < \dfrac{|I|}{4} \\[2mm] |I| + \dfrac{|Q|}{4} + \dfrac{|Q|}{16} & when & |Q| < \dfrac{|I|}{2} & and & |Q| > \dfrac{|I|}{4} \\[2mm] |I| + \dfrac{|Q|}{4} + \dfrac{|Q|}{32} & when & |Q| < \dfrac{3|I|}{4} & and & |Q| > \dfrac{|I|}{2} \\[2mm] |I| + \dfrac{|Q|}{4} + \dfrac{|Q|}{8} + \dfrac{|Q|}{64} & when & |Q| < |I| & and & |Q| > \dfrac{3|I|}{4} \end{cases}$$

After obtaining amplitudes from the amplitude calculator 410, the inner-and-outer meter calculator 420 then generates the maximum amplitude R1 and the minimum amplitude R2 according to the plurality of symbol amplitudes. A detailed description of the inner-and-outer meter calculator 420 is provided in the following. The inner-and-outer meter calculator 420 further comprises a sorter 510, memory modules 520 and 540, and extractors 530 and 550. The sorter 510 sorts the plurality of amplitudes from a minimum value to a maximum. The memory modules 520 stores the largest M amplitudes L(1), L(2), ..., L(M) and the memory modules 540 stores the least N amplitudes S(1), S(2), ..., S(N). Finally, the extractor 530 chooses one amplitude L(M') in a middle range of the memory module 520 as the maximum amplitude R1 according to the parameter M'; the extractor 550 also chooses one amplitude S(N') in a middle range of the memory module 540 as the minimum amplitude R2 according to the parameter N'. After the maximum and minimum amplitudes R1 and R2 are determined, the order calculator 430 looks up the ratio of these amplitudes in the decision table and finds the corresponding QAM order $OD_{QAM}$.

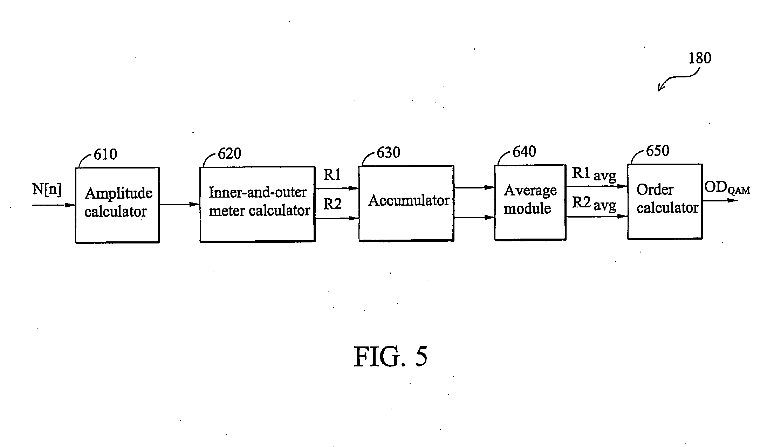

Please refer to Fig. 5. Fig.5 shows another block diagram of the QAM order calculator 180 in Fig.1. The QAM order calculator 180 comprises an amplitude calculator 610, an inner-and-outer meter calculator 620, an accumulator 630, an average module 640, and an order calculator 650. A detailed description of the elements 610~620 is omitted for the sake of brevity since it has already been described. In order to increase the accuracy, the maximum and minimum amplitudes R1 and R2 are calculated repeatedly to accumulate in the accumulator 630 and then an average in the average module 640 is output as the averaged maximum and minimum amplitudes $R1_{avg}$ and $R2_{avg}$. After the averaged maximum and minimum amplitudes $R1_{avg}$ and $R2_{1avg}$ are determined, the order calculator 650 will look up the ratio of $R1_{avg}$ to $R2_{1avg}$ in the decision table and find the corresponding QAM order $OD_{QAM}$.

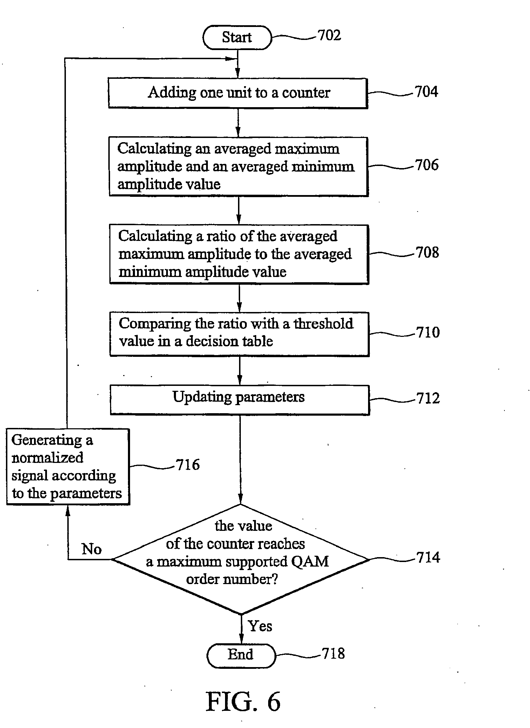

Please refer to Fig.6. Fig.6 is a flowchart of the order calculation method in a QAM receiver according to an embodiment of the invention. A detailed description is provided in the following.

Step 702: Start. Setting initial values of parameters. The parameters comprise window length W(e.g. 64, 128, 256, 512, 1024), middle sample positions M' and N', and a QAM order $OD_{QAM}$ (16, 32, 64, 128, 256).

Step 704: Adding one unit to a counter.

Step 706: Calculating an averaged maximum amplitude and an averaged minimum amplitude value.

Step 708: Calculating a ratio of the averaged maximum amplitude to the averaged minimum amplitude value.

Step 710: Comparing the ratio with a threshold value in a decision table.

Step 712: Updating parameters.

Step 714: Determining whether the value of the counter reaches a maximum supported QAM order number? If yes, choosing the current QAM order as the final QAM order in a receiver.

Step 716: Generating a normalized signal according to the parameters.

Step 718: End.

Compared with the related art, the QAM order calculation method of the invention requires less memory and raises the accuracy of calculation. Additionally, the higher value of the QAM order, the more accuracy.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

1. An order calculation method in a quadrature amplitude modulation (QAM) receiver comprising:

   calculating (706) a maximum amplitude and a minimum amplitude value from a plurality of amplitudes in an input signal;
   calculating (708) a ratio of the maximum amplitude to the minimum amplitude value; and
   determining (714) a QAM order according to the ratio;
   wherein the maximum amplitude is an averaged maximum amplitude and the minimum amplitude value is an averaged minimum amplitude value.

2. The order calculation method as claimed in claim 1, wherein the determining step further comprises: looking up the ratio in a decision table to determine the QAM order wherein the decision table stores the relationship between the QAM order and the ratio.

3. The order calculation method as claimed in claim 1, wherein a window length of the input signal is at least 4 times larger than the QAM order.

4. The order calculation method as claimed in claim 3, wherein the step of calculating the maximum and minimum amplitudes further comprises:

   sorting the plurality of amplitudes;
   storing the largest M amplitudes, wherein M is a predetermined positive value;
   storing the least N amplitudes, wherein N is a predetermined positive value;
   choosing an amplitude of a position M' from the M amplitudes as the maximum amplitude, wherein M' is a first parameter; and
   choosing an amplitude of a position N' from the N amplitudes as the minimum amplitude, wherein N' is a second parameter.

5. The order calculation method as claimed in claim 4 further comprising: updating the first and second parameters M' and N' and the window length W to calculate different maximum and minimum amplitudes and ratios.

6. The order calculation method as claimed in claim 5, wherein the determining step further comprises: determining the QAM order according to a plurality of ratios from different parameters and window length.

**Patentansprüche**

1. Ein Reihenfolge- Berechnungsverfahren in einem Quadratur- Amplituden- Modulationsempfänger (QAM), umfassend:

   Berechnung (706) eines maximalen Amplituden- und eines minimalen Amplitudenwerts aus einer Mehrzahl von Amplituden in einem Eingangssignal;
   Berechnen (708) eines Verhältnisses des maximalen Amplituden- zum minimalen Amplitudenwert, und
   Bestimmen (714) einer QAM- Reihenfolge entsprechend des Verhältnisses;
   wobei die maximale Amplitude eine durchschnittliche maximale Amplitude ist und der minimale Amplitudenwert ist ein durchschnittlicher minimaler Amplitudenwert.

2. Das Reihenfolge- Berechnungsverfahren nach Anspruch 1, wobei der vorbestimmende Schritt weiterhin umfasst: Betrachten des Verhältnisses in einer Entscheidungstabelle zur Bestimmung der QAM- Reihenfolge wobei die Entscheidungstabelle die Verbindung zwischen der QAM- Reihenfolge und des Verhältnisses speichert.

3. Das Reihenfolge- Berechnungsverfahren nach Anspruch 1, wobei eine Fensterlänge des Eingangssignals mindestens viermal größer ist als bei der QAM- Reihenfolge.

4. Das Reihenfolge- Berechnungsverfahren nach Anspruch 3, wobei der Schritt der Berechnung der maximalen und der minimalen Amplitude ferner umfasst:

   Sortieren der Mehrzahl von Amplituden;
   Speichern der größten M Amplituden, wobei M ein vorbestimmter positiver Wert ist;
   Speichern der geringsten N Amplituden, wobei N ein vorbestimmter positiver Wert ist;
   Auswählen einer Amplitude einer Position M 'aus dem M Amplituden als maximale Amplituden, wobei M 'ein erster Parameter ist, und
   Auswählen einer Amplitude aus einer Position N 'aus den N Amplituden als die minimale Amplitude, wobei N' ein zweiter Parameter ist.

5. Das Reihenfolge- Berechnungsverfahren nach Anspruch 4, ferner umfassend:

   Aktualisieren des ersten und zweiten Parameters M' und N' und der Fensterlänge W, um unterschiedliche maximale und minimale Amplituden und Verhältnisse zu berechnen.

6. Das Reihenfolge- Berechnungsverfahren nach Anspruch 5, wobei der Bestimmungsschritt ferner umfasst: Bestimmen der QAM- Reihenfolge entsprechend einer Vielzahl von Verhältnissen von verschiedenen Parametern und der Fensterlänge.

**Revendications**

1. Une méthode de calcul d'ordre dans un récepteur (QAM) en modulation d'amplitude en quadrature comprenant:

   le calcul (706) d'une valeur d'amplitude maximale et d'une valeur d'amplitude minimale à partir de plusieurs amplitudes d'un signal d'entrée;
   le calcul (708) d'un rapport de la valeur de l'amplitude maximale à l'amplitude minimale; et
   la détermination (714) d'un ordre QAM en fonction du rapport;
   dans laquelle l'amplitude maximale est une amplitude maximale moyennée et l'amplitude minimale est une valeur d'amplitude minimale moyennée.

2. La méthode de calcul d'ordre telle que revendiquée dans la revendication 1, dans laquelle l'étape de détermination comporte en outre: la recherche du rapport dans une table de décision pour déterminer l'ordre QAM, la table de décision stockant une relation entre l'ordre QAM et le rapport.

3. La méthode de calcul d'ordre telle que revendiquée dans la revendication 1, dans laquelle une longueur de fenêtre du signal d'entrée est au moins quatre fois plus large que l'ordre QAM.

4. La méthode de calcul d'ordre telle que revendiquée dans la revendication 3, dans laquelle l'étape de calcul des amplitudes maximale et minimale comprend:

le tri effectué entre plusieurs amplitudes;

le tri des M amplitudes les plus importantes, dans lequel M est une valeur positive prédéterminée;

le tri des N amplitudes moindres, dans lequel N est une valeur positive déterminée;

la sélection d'une amplitude de rang M' parmi les M amplitudes prise comme l'amplitude maximale, dans laquelle M'est un premier paramètre; et

la sélection d'une amplitude de rang N' parmi les N amplitudes prise comme amplitude minimale, dans laquelle N' est un second paramètre.

5. La méthode de calcul d'ordre telle que revendiquée dans la revendication 4 comprenant en outre:

la mise à jour des premier et second paramètres M' et N' et de la longueur de fenêtre W pour calculer différentes amplitudes maximales et minimales et leurs rapports

6. La méthode de calcul d'ordre telle que revendiquée dans la revendication 5 dans laquelle l'étape de détermination comporte en outre:

la détermination de l'ordre QAM en fonction d'une pluralité de rapports à partir de différents paramètres et différentes longueurs de fenêtres.

FIG. 1

| | 16QAM | 32QAM | 64QAM | 128QAM | 256QAM |
|---|---|---|---|---|---|
| R1/R2 | 3 | 4.1231 | 7 | 9.2195 | 15 |
| OD$_{QAM}$ | 16 | 32 | 64 | 128 | 256 |

FIG. 2

EP 1 868 340 B1

FIG. 3A

FIG. 3B

FIG. 3D

FIG. 3C

FIG. 3E

FIG. 4

N[n] → **610** Amplitude calculator → **620** Inner-and-outer meter calculator → R1, R2 → **630** Accumulator → **640** Average module → R1 $_{avg}$, R2 $_{avg}$ → **650** Order calculator → OD$_{QAM}$

180

## FIG. 5

Start — 702

Adding one unit to a counter — 704

Calculating an averaged maximum amplitude and an averaged minimum amplitude value — 706

Calculating a ratio of the averaged maximum amplitude to the averaged minimum amplitude value — 708

Comparing the ratio with a threshold value in a decision table — 710

Updating parameters — 712

Generating a normalized signal according to the parameters — 716

the value of the counter reaches a maximum supported QAM order number? — 714

No

Yes

End — 718

FIG. 6

**EP 1 868 340 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5185763 A